# EUROPEAN PATENT APPLICATION

(11) **EP 2 526 772 A1**
(43) Date of publication of application: **28.11.2012**
(21) Application number: 10844004.1
(22) Date of filing: 28.12.2010
(51) Int. Cl.: A01N 55/00, A01N 25/02, A01N 25/30, A01N 33/12, A01N 47/44, A01P 3/00, A47L 13/20, C09K 3/00

(54) **MULTIFUNCTIONAL SURFACE TREATMENT COMPOSITION**

(30) Priority: 19.01.2010 JP 2010009544
(71) Applicant: Teramoto Corporation Ltd., Osaka-shi, Osaka 550-0012 (JP)
(72) Inventor: TERAMOTO, Nobushige, Osaka-shi Osaka 550-0012 (JP); TERAMOTO, Hisanori, Osaka-shi Osaka 550-0012 (JP); AOE, Takeshi, Ibaraki-shi Osaka 567-0802 (JP)
(74) Representative: Grünecker, Kinkeldey, Stockmair & Schwanhäusser
(86) International application number: PCT/JP2010/073780
(87) International publication number: WO 2011/089840

(57) **Abstract**

By treating a material to be treated with a multifunctional surface-treatment agent composition containing octadecyldimethyl(3-trimethoxysilylpropyl)ammonium chloride and/or octadecyldimethyl(3-triethoxysilylpropyl)ammonium chloride, an amido amine oxide, an alcohol, and water, cloudiness and precipitation occurring during low-temperature storage is prevented; antibacterial properties are exhibited; deodorization properties, water repellency, and oil repellency are improved; and frictional resistance is reduced.

## Description

### Technical Field

The present invention relates to a multifunctional surface-treatment agent composition containing octadecyldimethyl(3-trimethoxysilylpropyl)ammonium chloride and/or octadecyldimethyl(3-triethoxysilylpropyl)ammonium chloride.

### Background Art

In each field, the consciousness of attaching much importance to sanitary aspect of articles to which people touch or facilities used by people tends to increase in such a manner that the articles and facilities are required to have antibacterial properties.
In medical instruments such as dental furniture, the necessity of imparting antibacterial properties to the surface of the instruments is known, and there are known several applications besides medical use which require antibacterial properties, including a wet area of buildings, toilet bowls, food containers, breeding tanks for fish and the like, flower vases, cleaning utensils, and clothes. Therefore, imparting antibacterial properties to these articles has been widely made by treating the articles with antibacterial agents such as metals such as silver and compounds thereof and various antibacterial organic compounds or by blending these antibacterial agents with materials which constitute the articles.

However, such surface treatment may need to include not only a coating step but also a step of heat treatment in order to impart antibacterial properties, or antibacterial properties may not be sustained over a long period of time because antibacterial agents are gradually removed in use due to a weak adhesive power to the surface, or antibacterial properties may be reduced by washing.
In particular, if antibacterial properties are not sustained in an article, the antibacterial properties imparted by the antibacterial treatment may already be lost when the article is actually used. As a result, the effect of the antibacterial treatment may not be exhibited. In addition to the above, a user may use an article in which bacteria have been propagated without knowing it, which may pose a risk on health.

Further, when antibacterial agents such as metals such as silver and compounds thereof and various antibacterial organic compounds are blended with materials which constitute articles, the antibacterial agents will be present also in the inner part of the articles, and therefore, antibacterial agents more than needed will be required.
In such a situation, there is known in recent years a technique of coating an article with a silicon-containing compound for imparting antibacterial properties to impart antibacterial properties. Among such silicon-containing compounds, octadecyldimethyl(3-trimethoxysilylpropyl)ammonium chloride is known.

Patent Literature 1 describes a technique of treating a foam glass body having a silica gel coating thereon with a methanol solution of octadecyldimethyl(3-trimethoxysilylpropyl)ammonium chloride as a functional compound to immobilize the octadecyldimethyl(3-trimethoxysilylpropyl)ammonium chloride.
Patent Literature 2 describes an antibacterial material characterized in that on the surface of the antibacterial material octadecyldimethyl(3-trimethoxysilylpropyl)ammonium chloride is immobilized as a silane compound having an antibacterial substance.
Patent Literature 3 describes an aqueous antibacterial agent solution containing octadecyldimethyl(3-trimethoxysilylpropyl)ammonium chloride, wherein the pH of the aqueous solution is adjusted to 3.5 to 2.0; this aqueous solution is excellent in storage stability by adjusting the pH thereof to the above range; and this aqueous solution is brought into contact with the surface of a material to be treated with the antibacterial agent for a certain period of time and then washed and dried.
Patent Literature 4 describes a method for antibacterial treatment of a synthetic resin comprising immersing the synthetic resin in an aqueous solution of octadecyldimethyl(3-trimethoxysilylpropyl)ammonium chloride, and describes that the surface of the synthetic resin after the treatment has an angle of contact with pure water of 80 to 90°.
Patent Literature 5 describes a detergent composition containing a silicon-containing compound such as octadeeyldimethyl(3-trimethoxysilylpropyl)ammonium chloride, and describes that materials to be treated which were washed with the detergent composition include artificial tooth, toilet bowls, articles for toilet, bathtubs, articles for bathroom, tableware, glasses, sinks, articles for kitchen, lavatory bowls, articles for lavatory, textile goods, and clothes, and also describes that the detergent composition is excellent in washing and antibacterial properties, and the antibacterial sustainability of the materials to be treated are excellent.
Patent Literature 6 describes an antibacterial separation membrane in which a silane compound having an antibacterial action such as octadecyldimethyl(3-trimethoxysilylpropyl)ammonium chloride is fixed to a separation membrane.
Patent Literature 7 describes an antibacterial film case in which a coated layer containing cellulose acetate as an antibacterial agent is formed on the inner surface of a film case body.
Patent Literature 8 describes an antibacterial tempered glass article in which a solution containing silver or a liquid in which silver particulates are dispersed is applied to the surface of a tempered glass article, followed by heating the glass article to disperse silver in the inner surface of a layer part.
Patent Literature 9 describes previous sterilization of sea water to be used for the cultivation of marine organisms.
Patent Literature 10 describes a flower vase to accommodate a flower or the like, wherein the inner surface of a base plate body comprises a substance containing an antibacterial metal.

### Citation List

### Patent Literature

Patent Literature 1: Japanese Patent Laid-Open No. 2004-345243
Patent Literature 2: Japanese Patent No. 3834655
Patent Literature 3: Japanese Patent Laid-Open No. 2007-31290
Patent Literature 4: Japanese Patent Laid-Open No. 2007-126557
Patent Literature 5: Japanese Patent Laid-Open No. 2007-146134
Patent Literature 6: Japanese Patent Laid-Open No. 2009-165949
Patent Literature 7: Japanese Patent Laid-Open No. 2003-312626
Patent Literature 8: Japanese Patent Laid-Open No. 11-319042
Patent Literature 9: Japanese Patent Laid-Open No. 2007-44611
Patent Literature 10: Japanese Patent Laid-Open No. 2000-342074

### Summary of Invention

### Technical Problem

As described above, it is known that octadecyldimethyl(3-trimethoxysilylpropyl)ammonium chloride is a compound for surface treatment having an antibacterial action.
However, since an aqueous solution of this compound is poor in stability, cloudiness and precipitation may occur particularly during low-temperature storage after the compound is prepared as a composition for surface treatment. As a result, the composition will not be in a state of uniform solution and may not be able to exhibit a sufficient effect in the subsequent use. The composition may deteriorate after it is prepared and during it is applied to an object and dried, and the object treated in such a state may not be able to exhibit a predetermined property. Further, if pH is adjusted to 3.5 to 2.0 for obtaining a uniform solution, it is difficult to use the solution as it is for treating the object that is poor in acid resistance.

In addition, it is difficult to use the composition for various applications if it has only antibacterial properties. Positive deodorization is required in addition to antibacterial properties in order to treat equipment, window glass, and the surface of floors and walls used for a wet area such as a toilet. For further simplifying the cleaning after treating these objects, it is required to enhance water repellency and oil repellency in order to improve stain resistance. Furthermore, it is also required to have low frictional properties to cleaning utensils.
Further, if it is not excellent also in stain resistance, frequent maintenance such as cleanup will be necessary after antibacterial treatment, which will reduce availability.

Further, if a part in contact with a cleanup object in various cleanup utensils for cleaning by rubbing such as a mop and a dustcloth has particularly a high frictional resistance, an additional force will be further required for cleanup, and as a result, a larger force will be required in cleanup, which has caused a strong sense of fatigue to those who perform cleanup. When various cleanup utensils are washed after cleanup, the stain adhering to the cleanup utensil is difficult to come off and washing has been difficult if the cleanup utensil does not have stain resistance in itself.
Also in different fields such as in the fields of containers for food, cultivation of organisms, and storage of cut flowers, a cellulose acetate-containing layer or a diffusion layer of antibacterial metals such as silver has been provided in the inner surface of a container, or sea water required for cultivation has been sterilized in a separate apparatus.

### Solution to Problem

As a treatment agent composition for solving the above problems, a multifunctional surface-treatment agent composition containing octadecyldimethyl(3-trimethoxysilylpropyl)ammonium chloride and/or octadecyldimethyl(3-triethoxysilylpropyl)ammonium chloride, an amido amine oxide, an alcohol, and water is employed.
The composition may contain only one of the octadecyldimethyl(3-trimethoxysilylpropyl)ammonium chloride and octadecyldimethyl(3-triethoxysilylpropyl)ammonium chloride, wherein the concentration thereof is 0.01 to 10% by weight; or the composition may contain both octadecyldimethyl(3-trimethoxysilylpropyl)ammonium chloride and octadecyldimethyl(3-triethoxysilylpropyl)ammonium chloride, wherein the total concentration thereof is 0.01 to 10% by weight.
The amido amine oxide may be lauramidopropyl dimethylamine oxide, wherein the concentration of the amido amine oxide may be 0.01 to 10% by weight.
The composition may further contain 0.01 to 5% by weight of a polyhexamethylene biguanide compound.
The multifunctional surface-treatment agent composition may be a solution which is stable for one week or more at a temperature range of 2°C to 50°C.

### Advantageous Effects of Invention

The effect by the present invention is in that even if octadecyldimethyl(3-trimethoxysilylpropyl)ammonium chloride and/or octadecyldimethyl(3-triethoxysilylpropyl)ammonium chloride is stored, storage stability is significantly improved by containing amido amine oxide in the system, and such an effect is exhibited that even when a solution of the resulting multifunctional surface-treatment agent composition loses stability and becomes cloudy, it is restored to an original stable solution by warming, and thereby, a treated material to be treated can exhibit a predetermined effect.

Further, such a further effect can be obtained that regardless of the storage state of the multifunctional surface-treatment agent composition, it can be optionally warmed and then used for a treatment object.
The present inventor has verified that such an effect is obtained that when a treatment object is treated with a multifunctional surface-treatment agent composition containing an amido amine oxide, the surface of the treatment object is imparted not only with antibacterial properties, but with water repellency, low friction, and deodorization effect.
Furthermore, antibacterial properties can be further increased by adding a polyhexamethylene biguanide compound to the multifunctional surface-treatment agent composition of the present invention.

Further, by these effects, the multifunctional surface-treatment agent composition of the present invention can maintain a sanitary condition of a treatment object that is required to take a sanitary aspect into consideration, as a composition for treating the treatment object. In addition, the surface of a treatment object to be cleaned is imparted with low frictional properties that reduce the force required for cleaning such as mopping (work) and properties for preventing the occurrence of a bad smell. As a result, such an effect can be obtained that reduction of a burden on a cleaning worker during cleaning, improvement of working efficiency, and improvement of environment can be achieved. Further, a cleaning utensil such as a mop is treated to thereby impart low frictional properties to the cleaning utensil itself. Therefore, it is possible to reduce the force required for rubbing while keeping the cleaning utensil in close contact with a target surface during the use thereof.

Further, a stabilized multifunctional surface-treatment agent composition can provide a surface of object with which an antibacterial compound is combined. Therefore, the surface can be formed as a surface having antibacterial properties for a long period of time unlike a surface obtained only by means such as the application of an antibacterial substance-containing layer, and it is not necessary to perform heat treatment, which is performed, for example, for diffusing silver.
Further, it is not necessary to sterilize water in a separate apparatus for cultivation or rearing of aquatic organisms such as marine organisms.

### Description of Embodiments

(Octadecyldimethyl(3-trimethoxysilylpropyl)ammonium chloride and octadecyldimethyl(3-triethoxysilylpropyl)ammonium chloride)
These components function as the main components for exhibiting an effect in the multifunctional surface-treatment agent composition of the present invention.
Octadecyldimethyl(3-trimethoxysilylpropyl)ammonium chloride and octadecyldimethyl(3-triethoxysilylpropyl)ammonium chloride may be blended each individually or in combination in the multifunctional surface-treatment agent composition.
When these silane compounds are applied to a treatment object, methoxy groups or ethoxy groups are decomposed and silicon atoms are bonded to the surface of the treatment object through oxygen atoms, and thereby these silane compounds are fixed to the surface of the treatment object.

The concentration thereof in the multifunctional surface-treatment agent composition is 0.01 to 10% by weight, preferably 0.5 to 7% by weight, more preferably 1 to 5% by weight. If the concentration is lower than 0.01% by weight, a sufficient treatment effect cannot be exhibited, and if it is higher than 10% by weight, the improvement of the effect corresponding to the increase in concentration will not be observed and the stability of the composition will be poor.

### (Amido amine oxide)

In the multifunctional surface-treatment agent composition of the present invention, the amido amine oxide is a component added as a surfactant, and the concentration thereof is 0.01 to 10% by weight, preferably 2 to 8% by weight, more preferably 3 to 7% by weight. If the concentration of the amido amine oxide is lower than 0.01% by weight, the storage stability at each temperature from high temperature to low temperature will get worse, and if it is higher than 10% by weight, a further effect as a surfactant will not be exhibited.
Further, even if the amido amine oxide as a surfactant is added to the multifunctional surface-treatment agent composition, the water repellency and oil repellency of the surface of the target object treated with the multifunctional surface-treatment agent composition will not be reduced.

The amido amine oxides which can be used include known amido amine oxides such as lauramidopropyl dimethylamine oxide, myristamidopropyl dimethylamine oxide, palmitamidopropyl dimethylamine oxide, oleamidopropyl dimethylamine oxide, stearamidopropyl dimethylamine oxide, coconut fatty acid amidopropyl dimethylamine oxide, lauramidoethyl dimethylamine oxide, lauramidopropyl diethylamine oxide, lauramidopropyl dihydroxyethylamine oxide, and lauramidopropyl dibutylamine oxide.

### (Alcohol)

Methanol and/or ethanol is preferred as an alcohol, but other known ethanol may be used as long as it is soluble in water and can be used as a solvent. The composition of alcohol is adjusted in consideration of a drying step after treatment. Therefore, the concentration of alcohol in the multifunctional surface-treatment agent composition may be any concentration within the range that allows dissolution. Usually, alcohol is used as a solvent of octadecyldimethyl(3-trimethoxysilylpropyl)ammonium chloride and octadecyldimethyl(3-triethoxysilylpropyl)ammonium chloride, and this solvent is blended as a solvent of the multifunctional surface-treatment agent composition as it is.

### (Polyhexamethylene biguanide compound)

Examples of the polyhexamethylene biguanide compound which can be used include polyhexamethylene biguanidine hydrochloride and polyhexamethylene biguanidine acetate. The antibacterial properties of the multifunctional surface-treatment agent composition can be further improved by adding this polyhexamethylene biguanide compound.
The concentration thereof in the multifunctional surface-treatment agent composition is 0.01 to 5% by weight. If the addition ratio is less than 0.01% by weight, the effect by the addition of the polyhexamethylene biguanide compound cannot be sufficiently exhibited, and even if it is added in an amount of 5% by weight or more, a further improvement effect of antibacterial properties cannot be expected.

The multifunctional surface-treatment agent composition can contain water. As used herein, water means the water contained in the composition and the water used at the time of dilution. The hardness of water is preferably 300 mg/l or less, more preferably 100 mg/l or less.
If hardness is 300 mg/l or more, the minerals contained in water are precipitated, adversely affecting storage safety. As a result, the surface modification performance of the present composition is affected.
Note that the use of low-hardness water poses no problem because the use of water having a hardness of 100 mg/l or less does not affect the storage stability and surface modification effect of the present composition at all.
The water quality standard of city water for hardness is 300 mg/l or less, and city water in most areas has a hardness of 100 mg/l or less, and therefore, the use of city water for dilution or the like poses no problem.

### (Other components which can be added)

To the multifunctional surface-treatment agent composition, known substances excellent in compatibility and dispersibility can be added in addition to the above components unless the function of the composition is prevented.
Examples of the substances which can be added include other antibacterial agents and disinfectants, other surfactants, viscosity controlling agents, resins such as acrylic resins and alkyd resins as a vehicle, fillers such as calcium carbonate, resin particles, silicon dioxide, pigments such as titanium dioxide and carbon black, inorganic color pigments, organic pigments, dyes, fluorescent substances, ultraviolet absorbers, insecticides, fragrance, and other additives having various properties.
When other antibacterial agents and disinfectants are used, a disinfectant and an antibacterial agent which particularly exhibit an effect on bacteria that pose a problem depending on a use place in order to eliminate the bacteria can be selected.

When a viscosity controlling agent, a vehicle, or a filler is blended, the viscosity of the multifunctional surface-treatment agent composition can be controlled, and the thickness of a layer made of the multifunctional surface-treatment agent composition formed when the composition is brought into contact with a target object can be adjusted. Therefore, the thickness of the film layer made of the multifunctional surface-treatment agent composition on the surface of the target object can be increased. As a result, the duration of the effect of the multifunctional surface-treatment agent composition can be extended, and a higher effect can be exhibited.

When a pigment, a dye, or a fluorescent substance is added, a layer made of the multifunctional surface-treatment agent composition can be visually verified when it is released or consumed as the treated object is used, and also can present various colors to thereby exhibit a design effect.
An ultraviolet absorber can prevent degradation by ultraviolet rays of an object and a multifunctional surface-treatment agent composition layer, and allows the effect by the multifunctional surface-treatment agent composition to be sustained for a longer period of time.

### (Method for adjusting and storing multifunctional surface-treatment agent composition)

The multifunctional surface-treatment agent composition is a composition prepared by blending the above components, and the components can be blended at room temperature by a common method for adjusting a solution, wherein the order of blending is not critical.
The multifunctional surface-treatment agent composition obtained by adjustment is stored in an opaque container until it is applied to an object on which antibacterial properties and the like are to be imparted. The storage temperature may be, for example, a temperature in a conventional warehouse or the like, and a particular caution will not be required unless it is stored in a severe winter period of a cold district or in an especially heated environment.
The composition can be stored for one month or more with a sufficient effect being maintained if it is stored at a temperature of 0 to 50°C. Even if the multifunctional surface-treatment agent composition becomes cloudy during storage, it can be restored to an original state with no cloudiness by a relatively mild warming condition of, for example, warming at 50°C for 2 hours.

### (Object to be treated with multifunctional surface-treatment agent composition)

An object which can be treated with the multifunctional surface-treatment agent composition may include, regardless of the material, any of inorganic matter, organic matter, a synthesized product, and a natural product, and may be a soft material and/or a hard material. Anything that needs to be imparted with antibacterial properties, deodorization properties, water repellency and oil repellency, and low frictional properties may be regarded as an object.
Examples of the inorganic matter include metals such as iron and stainless steel, glass, glass fiber, china, tiles, concretes, and stone. Examples of the organic matter may include synthetic resin such as synthetic rubber, polyethylene, polyester, polyvinyl chloride, and polyurethane, and natural resin such as natural rubber, and natural products such as wood, paper, and bamboo.

The form of an object is not limited, and those having the following various forms may be an object of treatment:
fibers including organic fiber including natural fiber such as cotton and silk and synthetic fiber such as rayon and polyester, and inorganic fiber such as carbon fiber and metal fiber; yarn and cloth made of these fibers; and various articles such as clothes and fiber sheets made of the cloth;
sheet and film-shaped articles such as resin sheets and films, metal sheets and films, paper, glass plates, and sheets made of wood or bamboo; and
articles with a porous surface and/or inner surface such as resin foams and inorganic foams.
Further, articles having various shapes such as a bar and a block made of various materials as described above may be a object.

Specific utensils which can be used for objects include products in various fields such as cleaning utensils such as brooms, sponges, dusters, wiping materials such as dustcloths, mops, and cloths, dustcloths, mops, brushes, resin dustpans, and metal dustpans, trash boxes made of resin or metal, shoe-wiping mats, door mats, foot-wiping mats, shoe insoles, artificial turfs, drainboards, umbrella stands, resin benches, wooden benches, linen-related products (sheets, pillow cases, and towels), clothes (underwear, shirts, uniforms, socks, and hats), sanitary goods (masks, diapers, and diaper covers), filters for air conditioning, internal surfaces of city water piping, internal and external surfaces of water purifiers, cooking equipment such as sinks, fixtures in a wet area such as tap utensils, washstands, equipment in bathrooms such as stainless steel bathtubs, resin bathtubs, and wooden bathtubs, washing toilet seat parts (toilet seats, piping), toilet bowls, baby goods (nursing bottles, toys), food containers, electric product switches for lighting utensils and the like, housing equipment such as tatami mats, window glass, fittings such as doorknobs, doors, walls, floors, windows, and indoor piping, laundry sinks of washing machines, household electrical appliances such as automatic dishwashers, components of vending machines of food and drink, water tanks, and flower vases.
Further, the equipment in the facilities which need be subjected to hygiene supervision is an object to be treated with the multifunctional surface-treatment agent composition of the present invention, including the interiors, various fixtures, and furniture in facilities used by many and unspecified people such as schools, hospitals, kindergartens, and homes for the aged, public transportation, or buildings such as houses.

### (Treatment method with multifunctional surface-treatment agent composition)

Examples of the treatment method by bringing the multifunctional surface-treatment agent composition into contact with each object to be treated as described above may include: means for bringing the multifunctional surface-treatment agent composition into direct contact with the surface of the object to be treated by immersion, spraying, or the like utilizing a common coating device; and a method in which the multifunctional surface-treatment agent composition is allowed to adhere to a brush or cloth, and the composition is applied and extended to the surface of the object to be treated by using the brush and cloth. It is necessary to treat the whole surface of the object to be treated when any method is employed. Further, after bringing the multifunctional surface-treatment agent composition into contact with the object for a certain period of time, excess of the multifunctional surface-treatment agent composition is wiped off or washed away with a damp cloth, water washing, or the like, thereby improving a finishing condition.

In performing the treatment by such means, it is required to wash the object. If it is contaminated, a sufficient treatment effect may not be obtained. Surface treatment such as corona discharge treatment and plasma treatment may optionally be performed as a pretreatment.
The temperature of the multifunctional surface-treatment agent composition during the treatment may be around ordinary temperature or about 0 to 50°C. When the multifunctional surface-treatment agent composition is cloudy, it is necessary to use it for treatment after the cloudiness is eliminated by warming, in order to allow a sufficient treatment effect to be exhibited.
When the surface treatment is performed by immersion, a treatment object may be immersed in a bath of the multifunctional surface-treatment agent composition for about 30 minutes. In particular, when a treatment object is a porous substance, it is required to allow the multifunctional surface-treatment agent composition to permeate the inner part, in order to perform sufficient treatment.
After the object is brought into contact with the multifunctional surface-treatment agent composition, it is dried at ordinary temperature to complete the treatment. Alternatively, after the object is brought into contact with the multifunctional surface-treatment agent composition for a certain period of time, excess of the multifunctional surface-treatment agent composition is wiped off or washed away with a damp cloth, water washing, or the like, thereby completing the treatment.

### Example 1

### Storage stability of the multifunctional surface-treatment agent composition used in the present invention

The multifunctional surface-treatment agent compositions Nos.1 to 10 based on the present invention shown in Table 1-1 were studied for the solution state immediately after formulation and the storage stability after storing for 1 month at 50°C, 40°C, and 20°C and for 7 days at 5°C and 2°C. The solution which was transparent after storage was rated as ○; and the solution which was cloudy after storage was rated as Δ.
The cloudy solutions were rewarmed at 50°C for 2 hours and observed for the restorability by checking the presence or absence of the cloudiness of the solution state. The solution from which the cloudiness disappeared and which was transparent was rated as ○.

**[Table 1-1]**

| Multifunctional surface-treatment agent composition No. | 1 | 2 | 3 | 4 | 5 | 6 | 7 | 8 | 9 | 10 |
|---|---|---|---|---|---|---|---|---|---|---|
| Ion exchange water | 84.7 | 88.3 | 88 | 88 | 79.9 | 79.9 | 79.9 | 70.6 | 70.6 | 60.9 |
| (1) 60% octadecyldimethyl(3-trimethoxysilylpropyl)ammonium chloride/40% methanol solution | 5 | 5 | - | 2.5 | 8.3 | - | 4.15 | 12.5 | 6.25 | 1.6 |
| (2) 60% octadecyldimethyl(3-triethoxysilylpropyl)ammonium chloride/40% ethanol solution | - | - | 5 | 2.5 | - | 8.3 | 4.15 | - | 6.25 | - |
| (3) Lauramidopropyl dimethylamine oxide (30%) | 10 | 6.7 | 6.7 | 6.7 | 11.5 | 11.5 | 11.5 | 16.6 | 16.6 | 22.2 |
| (4) Polyhexamethylene biguanide compound hydrochloride (100%) | 0.3 | - | 0.3 | 0.3 | 0.3 | 0.3 | 0.3 | 0.3 | 0.3 | 0.3 |
| Total | 100 | 100 | 100 | 100 | 100 | 100 | 100 | 100 | 100 | 100 |
| I: Solution state immediately after formulation | ○ | ○ | ○ | ○ | ○ | ○ | ○ | ○ | ○ | ○ |
| II: Storage stability at 50°C for 1 month | ○ | ○ | ○ | ○ | ○ | ○ | ○ | ○ | ○ | ○ |
| III: Storage stability at 40°C for 1 month | ○ | ○ | ○ | ○ | ○ | ○ | ○ | ○ | ○ | ○ |
| IV: Storage stability at 20°C for 1 month | ○ | ○ | ○ | ○ | ○ | ○ | ○ | ○ | ○ | ○ |
| V: Storage stability at 5°C for 7 days | ○ | ○ | ○ | ○ | ○ | ○ | ○ | ○ | ○ | Δ |
| VI: Storage stability at 2°C for 7 days | ○ | ○ | ○ | ○ | Δ | Δ | Δ | Δ | Δ | Δ |
| VII: Restorability of solution state by rewarming at 50°C for 2 hours after testing at 2°C for 7 days | | | | | ○ | ○ | ○ | ○ | ○ | ○ |

As described in Table 1-1, the state of the multifunctional surface-treatment agent compositions of the present invention remains unchanged and is satisfactory even when it is stored for 1 month at 20 to 50°C. When the compositions are stored at 2 to 5°C for 7 days, cloudiness occurs in the case where the total concentration of octadecyldimethyl(3-trimethoxysilylpropyl)ammonium chloride and/or octadecyldimethyl(3-triethoxysilylpropyl)ammonium chloride is high. However, even in such a case, the cloudiness disappears by warming the compositions at 50°C for 2 hours, and they return to the original transparent compositions, showing satisfactory storage stability.

### Comparative Example 1: Storage stability of treatment agent compositions other than the present invention

The treatment agent compositions Nos.1 to 8 not based on the present invention shown in Table 1-2 were studied for the solution state immediately after formulation, and the storage stability after storing for 1 month at 50°C, 40°C, and 20°C and for 7 days at 5°C and 2°C, in the same manner as in Example 1. The solution which was transparent after storage was rated as ○; the solution which was cloudy after storage was rated as Δ; and the solution which produced precipitation was rated as ×.
Then, the solution which produced precipitation after testing at 2°C for 7 days was rewarmed at 50°C and observed for the restorability by checking the presence or absence of the precipitation or cloudiness of the solution state. The solution from which the precipitation did not disappear was rated as X.

**[Table 1-2]**

| Treatment agent composition No. | 1 | 2 | 3 | 4 | 5 | 6 | 7 | 8 |
|---|---|---|---|---|---|---|---|---|
| Ion exchange water | 95 | 95 | 95 | 91 | 93 | 93 | 87 | 88.8 |
| (1) 60% octadecyldimethyl(3-trimethoxysilylpropyl)ammonium chloride/40% methanol solution | 5 | - | - | 5 | - | 5 | 2.5 | - |
| (2) 60% octadecyldimethyl(3-triethoxysilylpropyl)ammonium chloride/40% ethanol solution | - | 5 | - | - | 5 | - | 2.5 | 5 |
| (3) 3-(trimethoxysilyl)propyldimethylhexadecyl ammonium chloride | - | - | 5 | - | - | - | - | - |
| (4) Alkyl benzyl dimethyl ammonium chloride (50%)/Sanisol C from Kao Corporation | - | - | - | 4 | - | - | - | - |
| (5) Polyoxyethylene (20) sorbitan monooleate (100%)/Emasol O-120V from Kao Corporation | - | - | - | - | 2 | - | - | - |
| (6) Polyoxyalkyl branched decyl ether/Noigen XL-80 from Dai-Ichi Kogyo Seiyaku Co., Ltd. | - | - | - | - | - | 2 | - | - |
| (7) Sodium polyoxyethylene lauryl sulfate/Emal 20C (25%) from Kao Corporation | - | - | - | - | - | - | 8 | - |
| (8) Lauryldimethyl amine oxide (32%)/Amogen AOL (32%) from Dai-Ichi Kogyo Seiyaku Co., Ltd. | - | - | - | - | - | - | - | 6.25 |

| Total | 100 | 100 | 100 | 100 | 100 | 100 | 100 | 100 |
|---|---|---|---|---|---|---|---|---|
| I: Solution state immediately after formulation | ○ | ○ | ○ | ○ | ○ | ○ | × | ○ |
| II: Storage stability at 50°C for 1 month | Δ | Δ | × | Δ | Δ | ○ | × | ○ |
| III: Storage stability at 40°C for 1 month | ○ | Δ | × | Δ | Δ | ○ | × | ○ |
| IV: Storage stability at 20°C for 1 month | × | × | × | Δ | Δ | Δ | × | Δ |
| V: Storage stability at 5°C for 7 days | × | × | × | × | × | × | × | × |
| VI: Storage stability at 2°C for 7 days | × | × | × | × | × | × | × | × |
| VII: Restorability of solution state by rewarming at 50°C after testing at 2°C for 7 days | × | × | × | × | × | × | × | × |

The composition of Comparative Examples in Table 1-2 is different from the composition of the multifunctional surface-treatment agent compositions of the present invention in that an amido amine oxide is not added in the composition of Comparative Examples.
The treatment agent compositions 3 to 8 of Comparative Examples are examples in which general-purpose surfactants are blended instead of amine oxides. In all of these treatment agent compositions, precipitation occurred during the storage for 1 month or 7 days at a temperature of 20°C or less. Further, in examples other than the treatment agent compositions 6 and 8, the cloudiness or precipitation occurred immediately after formulation or during the storage for 1 month at 50°C. The solutions after testing for 7 days at 2°C were warmed to 50°C. The precipitation did not disappear even in a state where the solutions were warmed for any hours, and the storage stability was not satisfactory.

### Example 2

### Results of the measurement of the number of living bacteria adhered to washstand

A washstand was previously washed with a commercially available bleaching agent (Kitchen Haiter manufactured by Kao Corporation) and then divided into two at the center thereof. The Example multifunctional surface-treatment agent composition No.1 was diluted 5 times with city water, and the resulting solution was applied to one side of the washstand with a rag. After 5 minutes of contact, the one side of the washstand was washed with water and subjected to the processing treatment. The washstand was used 20 times a day, in average, and after 1 month and a half, each surface was wiped off with a swab and the number of living bacteria on the surface was measured. The swab was prepared by immersing a commercially available sterilized swab (Doctor Swab manufactured by Heiwa Medic Inc.) in pure water and shaking off excess water. The other side of the washstand was not subjected to the processing treatment.

Note that in the following Examples, the conditions for bacteria for measuring the number of bacteria are as follows:
Trichophyton mentagrophytes, Saccharomyces cerevisiae, Rhizopus stolonifer, Cladosporium cladosporioides, Fusarium graminearum, Aspergillus ochraceus, Aspergillus usutus, Candida albicans, Aspergillus fumigatus, Epicoccum purpurascens, Pestalotia neglecta, and Saccharomyces cerevisiae ... PDA agar medium for 4 days;
Escherichia coli ... MacConkey II agar medium for one day; and
a culture temperature was 30°C±5°C.

**[Table 2]**

| Treated with multifunctional surface-treatment agent composition | | Strain | Number of bacteria | Remarks |
|---|---|---|---|---|
| No | Yes | | | |
| 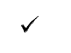 | | Trichophyton mentagrophytes | 100 > | Skin infection bacteria (athlete's foot; ringworm; it is easily generated on the mat of a bathroom. |
| | | Saccharomyces cerevisiae | 8.60E+07 | Baker's yeast |
| | 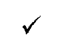 | richophyton mentagrophytes | 0.00E+00 | Skin infection bacteria (athlete's foot; ringworm; it is easily generated on the mat of a bathroom. |
| | | Saccharomyces cerevisiae | 7.60E+06 | Baker's yeast |

With respect to the number of bacteria on one side of the washstand treated with the multifunctional surface-treatment agent composition, the number of trichophyton mentagrophytes was zero, and the number of Saccharomyces cerevisiae was decreased to 7.6×10⁶, which corresponds to about 1/10.
Only the number of the skin infection bacteria was decreased to zero, and thus the sterilization was effectively completed.
On the other hand, trichophyton mentagrophytes, which is a skin infection bacteria, remains on the other side of the washstand which was treated with the multifunctional surface-treatment agent composition.

### Example 3

### Results of the measurement of the number of living bacteria adhered to urinal

A urinal was previously washed with a commercially available bleaching agent (Kitchen Halter manufactured by Kao Corporation) and then divided into two at the center thereof. The Example multifunctional surface-treatment agent composition No. 3 was diluted 5 times with city water, and the resulting solution was applied to one side of the urinal with a rag. After 5 minutes of contact, the one side of the urinal was washed with water and was subjected to processing treatment. After 1 month and a half, each surface was wiped off with a swab and the number of living bacteria after the 1 month and a half on the surface was measured. The swab was prepared by immersing a commercially available sterilized swab (Doctor Swab manufactured by Heiwa Medic Inc.) in pure water and shaking off excess water.

**[Table 3]**

| Treated with multifunctional surface-treatment agent composition | | Strain | Number of bacteria | Remarks |
|---|---|---|---|---|
| No | Yes | | | |
| 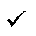 | | hizopus stolonifer | 2.70E+03 | Phytopathogenic bacteria |
| | | Saccharomyces cerevisiae | 1.30E+04 | Baker's yeast |
| | | Trichophyton mentagrophytes | 100 > | Skin infection bacteria (athlete's foot; ringworm; it is easily generated on the mat of a bathroom. |
| | 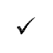 | hizopus stolonifer | 0 | Phytopathogenic bacteria |
| | | Saccharomyces cerevisiae | 7.70E+04 | Baker's yeast |
| | | Trichophyton mentagrophytes | 0 | Skin infection bacteria (athlete's foot; ringworm; it is easily generated on the mat of a bathroom. |

With respect to the number of bacteria on one side of the urinal treated with the multifunctional surface-treatment agent composition, the numbers of Rhizopus stolonifer and Trichophyton mentagrophytes were zero, and the number of Saccharomyces cerevisiae was decreased to 7.7×10⁴, which corresponds to about 1/10. As Rhizopus stolonifer is phytopathogenic bacteria and Trichophyton mentagrophytes is skin infection bacteria, it can be understood that the surface treated with the multifunctional surface-treatment agent composition is a cleaner surface.
On the other hand, a number of Rhizopus stolonifer and trichophyton mentagrophytes are present on the other side of the urinal which was not treated with multifunctional surface-treatment agent composition, and the resulting surface is a surface which is not clean.

### Example 4

### Results of the measurement of the number of living bacteria during the storage of milk

Two stopper type glass containers of the same shape having a total volume of 120 ml were prepared, and they were washed with a commercially available bleaching agent (Kitchen Haiter manufactured by Kao Corporation) and then sufficiently dried. The Example multifunctional surface-treatment agent composition treatment No. 4 was diluted 5 times with 100 ml of city water, and one of the glass containers was charged with the dilution, allowed to stand for 10 minutes, rinsed with running water, and dried. The other glass container was not subjected to the processing treatment. Commercially available milk (Delicious Milk manufactured by Meiji Dairies Corporation) was put into the glass containers and the glass containers with milk were allowed to stand for 5 hours in a state where they were not stoppered to bring the milk into contact with bacteria floating in air and then stoppered. The stoppered glass containers were allowed to stand for 1 week at room temperature, and then the number of living bacteria was measured.

**[Table 4]**

| Treated with multifunctional surface-treatment agent composition | | Strain | Number of bacteria | Remarks |
|---|---|---|---|---|
| No | Yes | | | |
| √ | | Rhizopus stolonifer | 5.50E+04 | Phytopathogenic bacteria |
| | | Cladosporium cladosporioides | 1.60E+02 | Plant pathogen, allergy pathogen (degraded contamination of substrate) |
| | √ | Rhizopus stolonifer | 3.60E+03 | Phytopathogenic bacteria |
| | | Cladosporium cladosporioides | 100 > | Plant pathogen, allergy pathogen (degraded contamination of substrate) |

The numbers of both Rhizopus stolonifer and Cladosporium cladosporioides were decreased to a greater extent in the case where the container was subjected to the multifunctional surface-treatment agent composition treatment than in the case where the container was not subjected to the treatment, and it was possible to suppress the propagation of the bacteria to a greater extent in the case where the container was subjected to the treatment.

### Example 5

### Results of the measurement of the number of living bacteria in the breeding tank of Japanese killifish

Two water tanks having the same shape and volume were prepared. The Example multifunctional surface-treatment agent composition treatment No. 5 was diluted 10 times with city water, and the dilution was applied to the inner surface of one of the water tanks with a rag. After the water tank was allowed to stand for 10 minutes, it was washed with water and dried. The other water tank was not subjected to the treatment. Into the water tanks were put 25 Japanese killifishes, respectively, and the number of living bacteria in the water after breeding for 1 week at room temperature was measured.

**[Table 5]**

| Treated with multifunctional surface-treatment agent composition | | Strain | Number of bacteria | Remarks |
|---|---|---|---|---|
| No | Yes | | | |
| 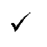 | | Trichophyton mentagrophytes | 1.40E+02 | Skin infection bacteria (athlete's foot; ringworm; it is easily generated on the mat of a bathroom. |
| | | Rhizopus stolonifer | 3.10E+03 | Phytopathogenic bacteria |
| | 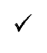 | Trichophyton mentagrophytes | 100 > | Skin infection bacteria (athlete's foot; ringworm; it is easily generated on the mat of a bathroom. |
| | | Rhizopus stolonifer | 0 | Phytopathogenic bacteria |

The numbers of both Trichophyton mentagrophytes and Rhizopus stolonifer were decreased to a greater extent in the case where the water tank was subjected to the multifunctional surface-treatment agent composition treatment than in the case where the water tank was not subjected to the treatment, and it was possible to suppress the propagation of the bacteria to a greater extent in the case where the water tank was subjected to the treatment.

### Example 6

### Results of the measurement of the number of living bacteria during the storage of cut flowers (aster), and test results of storage state

Two glass flower vases of the same shape having a total volume of 900 ml were prepared. The Example multifunctional surface-treatment agent composition treatment No. 3 was diluted 5 times with 50 ml of city water, and the dilution was put into one of the flower vases so as to spread over the inner surface; and then the flower vase was allowed to stand for 10 minutes, rinsed with running water, and dried. The other flower vase was not subjected to the treatment. Into the flower vases were added the same cut flowers and observed for 1 week at room temperature, and then the number of living bacteria was measured.

**[Table 6]**

| Treated with multifunctional surface-treatment agent composition | | Strain | Number of bacteria | Remarks |
|---|---|---|---|---|
| No | Yes | | | |
| 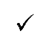 | | Trichophyton mentagrophytes | 1.40E+02 | Skin infection bacteria (athlete's foot; ringworm; it is easily generated on the mat of a bathroom.) The flower itself withered early. |
| | | Rhizopus stolonifer | 3.10E+03 | Phytopathogenic bacteria The flower itself withered early. |
| | 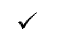 | Trichophyton mentagrophytes | 100 > | Skin infection bacteria (athlete's foot; ringworm; it is easily generated on the mat of a bathroom. |
| | | Rhizopus stolonifer | 0 | Phytopathogenic bacteria The flower itself withered early. |

The numbers of both Trichophyton mentagrophytes and Rhizopus stolonifer were decreased to a greater extent in the case where the flower vase was subjected to the multifunctional surface-treatment agent composition treatment than in the case where the flower vase was not subjected to the treatment, and it was possible to suppress the propagation of the bacteria to a greater extent in the case where the flower vase was subjected to the treatment. Particularly, this treatment is suitable for the storage of cut flowers because the number of phytopathogenic bacteria which wither flowers early is decreased to zero.

### Example 7

### Results of the measurement of the number of living bacteria using steamed towels, and test results for smell

Two towels of the same type were prepared. A. The multifunctional surface-treatment agent composition treatment No.3 of Example 1 was diluted 30 times with city water, and a towel was immersed in the dilution for 15 minutes, sufficiently rinsed with city water, and dried. B. A towel was treated with Kao Humming Flair (registered trademark). The body (right side of the body and left side of the body) after bathing was wiped with the treated towels, which were allowed to stand for 10 days, and then the number of living bacteria was measured. Treatment methods:
A: A towel was impregnated with the multifunctional surface-treatment agent composition No.3 of Example 1 for several minutes, washed, and dried for use.
B: Humming Flair/everyday soft essence in an amount of 0.3 g was diluted with 11 of city water, and a towel was immersed in the dilution for 15 minutes, removed from the solution, firmly squeezed, and dried.

**[Table 7]**

| Treatment agent | Strain | Number of bacteria | Remarks |
|---|---|---|---|
| Treated with Kao Humming Flair | Fusarium graminearum | 10 or less | Fungal toxin-producing strain |
| | Aspergillus ochraceus | 1.80E+02 | Fungal toxin-producing strain |
| | Aspergillus usutus | 100 or less | Fungal toxin-producing strain |
| | Candida albicans | 100 or more | Opportunistic pathogen (mycosis) |
| Treated with multifunctional surface-treatment agent composition (30 times) | No detected bacteria | 0 | |

The Humming Flair treatment is one of the common laundry methods. However, according to the method of the present invention, all the bacteria still remaining after the Humming Flair treatment are also sterilized. Therefore, the resulting towel will be extremely sanitary as a towel that directly touches a human body. Further, the smell is at a level that can hardly be sensed.

### Example 8

Antibacterial property improvement effect by adding polyhexamethylene biguanide compound to the multifunctional surface-treatment agent composition of the present invention

Dilutions of the multifunctional surface-treatment agent compositions No.1 and No.2 of Example 1 respectively diluted 30 times with city water were prepared. A new mop was immersed in each diluted solution for 15 minutes, sufficiently rinsed with running water, and dried, thus obtaining a mop treated with the multifunctional surface-treatment agent composition No. 1 and a mop treated with the multifunctional surface-treatment agent composition No. 2.

These mops were used to wipe a floor surface with water every day for one month and then measured for the number of living bacteria on the mops.

**[Table 8]**

| Detected bacteria | Multifunctional surface-treatment agent composition No 1 | Multifunctional surface-treatment agent composition No 2 |
|---|---|---|
| Saccharomyces cerevisiae | 20 or less | 2.70E+02 |
| Cladosporium sphaerospermum | 10 or less | 3.40E+02 |
| Aspergillus niger | No detected | 1.40E+02 |

The above test results show that the multifunctional surface-treatment agent composition No. 1 of the present invention containing a polyhexamethylene biguanide compound has a higher antibacterial effect than the multifunctional surface-treatment agent composition No. 2 of the present invention which does not contain a polyhexamethylene biguanide compound.

### Example 9

### Results of the measurement of the number of living bacteria using socks (men's socks H19 manufactured by SHIMAMURA Co., Ltd., with antibacterial and deodorant finishing), and test results for smell

Two pairs of socks of the same type were prepared. A: The Example multifunctional surface-treatment agent composition treatment processing No.3 was diluted 30 times with city water, and one of a pair of socks was immersed in the dilution for 15 minutes, sufficiently rinsed with city water, and dried. The other one of the pair of socks was not subjected to the processing. B: One of a pair of socks was subjected to treatment processing with Kao Humming Flair (registered trademark), and the other one of the pair of socks was not subjected to the processing. The number of living bacteria of the socks worn by the same person for 24 hours is measured.

### Treatment methods:

A: A towel was impregnated with the multifunctional surface-treatment agent composition for several minutes, washed, and dried for use.
B: Humming Flair/everyday soft essence in an amount of 0.3 g was diluted with 11 of city water, and one of a pair of socks was immersed in the dilution for 15 minutes, taken out of the solution, firmly squeezed, and dried.

**[Table 9]**

| Treatment agent | Strain | Number of bacteria | Remarks |
|---|---|---|---|
| Control (no treatment) | Aspergillus fumigatus | 10 or less | Phytopathogenic bacteria |
| | Trichophyton mentagrophytes | 1.60E+04 | Skin infection bacteria (athlete's foot, ringworm) |
| Treated with Kao Humming Flair | Epicoccum purpurascens | 10 or less | Phytopathogenic bacteria |
| | Trichophyton mentagrophytes | 3.00E+03 | Skin infection bacteria (athlete's foot, ringworm) |
| | Pestalotia neglecta | 1.40E+03 | Phytopathogenic bacteria |
| Treated with multifunctional surface-treatment agent composition (30 times) | No detected bacteria | 0 | |

All of the bacteria which were present in the control and the bacteria still remaining even after the Humming Flair treatment were sterilized by the processing using the multifunctional surface-treatment agent composition of the present invention. As a result, bacteria were not detected from the socks subjected to the processing, which shows that the socks were in a clean condition. Note that the growth of bacteria and suppression of a smell were not prevented in spite of the fact that the socks used for the test have been subjected to antibacterial and deodorant finishing and are provided with antibacterial and deodorant properties by the Humming Flair treatment.

### Example 10

### Results of the measurement of the number of living bacteria in the mop used for toilet cleaning, and test results for smell

Two mops of the same type (FX mop thread (J), manufactured by Teramoto Corp.) were prepared. The Example multifunctional surface-treatment agent composition No.3 was diluted 30 times with city water, and one of the mops was immersed in the dilution for 15 minutes, sufficiently rinsed with city water, and dried. Thus, the one of the mops was subjected to the treatment processing. The other mop was not subjected to the treatment and used as a control mop. The treated and untreated mops were used for 2 months and then measured for the number of living bacteria.

The mops were used in usual cleaning twice a day, washed with a detergent for cleaning a floor surface, and then washed with water.

**[Table 10]**

| Treatment agent | Strain | Number of bacteria | Remarks |
|---|---|---|---|
| Control (no treatment) | Escherichia coli | 100 or less | Escherichia coli |
| | Saccharomyces cerevisiae | 3.90E+05 | Baker's yeast |
| | Trichophyton mentagrophytes | 2.40E+04 | Skin infection bacteria (athlete's foot, ringworm) |
| Treated with multifunctional surface-treatment agent composition (30 times) | No detected bacteria | 0 | |

A number of bacteria such as skin infection bacteria were present on the untreated mop. On the other hand, the mop treated with the multifunctional surface-treatment agent composition was clean without detection of bacteria even after used for toilet cleaning for 2 months.

### Example 11

### Results of the measurement of antibacterial properties of ceramic tile (Ceramica Cleopatra "Hi-Tec Stone OZ-4600")

Treatment method with multifunctional surface-treatment agent composition: The Example multifunctional surface-treatment agent composition was diluted 5 times with city water. The ceramic tile was washed with a detergent and dried, and then coated with the dilution. After 5 minutes, the coated ceramic tile was washed with water and dried.

**[Table 11]**

| | Number of original bacteria | | Number of bacteria |
|---|---|---|---|
| Escherichia coli | Multifunctional surface-treatment agent composition No.2 | 1.3x10E+6 | 100 or less |
| | Multifunctional surface-treatment agent composition No.3 | | 10 or less |
| | Multifunctional surface-treatment agent composition No.4 | | 10 or less |
| Pseudomonas aeruginosa | Multifunctional surface-treatment agent composition No.2 | 1.3x10E+6 | 100 or less |
| | Multifunctional surface-treatment agent composition No.3 | | 10 or less |
| | Multifunctional surface-treatment agent composition No.4 | | 10 or less |
| Staphylococcus aureus | Multifunctional surface-treatment agent composition No.2 | 1.5x10E+6 | 100 or less |
| | Multifunctional surface-treatment agent composition No.3 | | 10 or less |
| | Multifunctional surface-treatment agent composition No.4 | | 10 or less |

**[Table 12]**

| | Number of original bacteria | | Number of bacteria |
|---|---|---|---|
| Escherichia coli | Treatment agent composition No.1 | 1.3x10E+6 | 100 or more |
| | Treatment agent composition No.4 | | 100 or more |
| | Treatment agent composition No.5 | | 1.0x10 |
| Pseudomonas aeruginosa | Treatment agent composition No.1 | 1.3x10E+6 | 1.0x10 |
| | Treatment agent composition No.4 | | 100 or more |
| | Treatment agent composition No.5 | | 1.5x10 |
| Staphylococcus aureus | Treatment agent composition No.1 | 1.5x10E+6 | 100 or more |
| | Treatment agent composition No.4 | | 100 or more |
| | Treatment agent composition No.5 | | 100 or more |

Note that with respect to the culture conditions for measuring the number of bacteria in this test, MacConkey II agar medium was used for Escherichia coli, and OPA Staphylococcus medium was used for Pseudomonas aeruginosa and Staphylococcus aureus, and all the bacteria were cultivated for 1 day.
A dilution was used. A paper filter was dipped in the dilution and then dried at room temperature to obtain a specimen. On the specimen was inoculated 1 ml of a liquid of test bacteria, which was washed after the cultivation period of each strain, and the number of living bacteria was measured.

The examples in which the composition of the present invention was used as shown in Table 11 provided the results that all the ceramic tiles after the treatment had an extremely small number of bacteria of 10 or less or 100 or less.
These results mean that when the ceramic tile is treated with the composition of the present invention, an antibacterial effect can be positively exhibited. Moreover, as is clear from the descriptions in other Examples, it is obvious that the same effect can be exhibited also in the materials to be treated made of various materials other than the ceramic tile.
On the other hand, as shown in Table 12, when the treatment compositions Nos. 1, 4, and 5 as Comparative Examples are used, which correspond to the compositions in which lauramidopropyl dimethylamine oxide which is an amido amine oxide is removed from the composition of the present invention, these compositions surely exhibit certain antibacterial properties which are somewhat different depending on target bacteria, but they are obviously poorer in antibacterial properties than the compositions of the present invention as shown in Table 11.

According to these results, it is obvious that the composition of the present invention exhibits excellent antibacterial properties not only because it contains octadecyldimethyl(3-trimethoxysilylpropyl)ammonium chloride or octadecyldimethyl(3-triethoxysilylpropyl)ammonium chloride but because it also contains an amido amine oxide.

### Example 12

### Test results for the water repellency/oil repellency of ceramic tile (Ceramica Cleopatra "Hi-Tec Stone OZ-4600")

Treatment method with multifunctional surface-treatment agent composition: The Example multifunctional surface-treatment agent composition No. 3 was diluted 5 times with city water. The ceramic tiles were washed with detergent and dried, and then coated with the dilution. After 5 minutes, the coated ceramic tiles were washed with water and dried. The contact angle of water was measured for the ceramic tile which was subjected to the above treatment and an untreated ceramic tile under the following conditions.

**[Table 13]**

| | | Untreated | Treated with multifunctional surface-treatment agent composition (5 times) |
|---|---|---|---|
| Contact angle (°) | Distilled water | 61 | 96 |
| | Salad oil | 25 | 46 |

From these results, it can be understood that the surface of the ceramic tile prepared by applying the multifunctional surface-treatment agent composition was improved in both water repellency and oil repellency. * Measurement of the contact angle was performed at 23°C and 50% RH using an image-processing type solid-fluid interface analysis system DropMaster-500 (manufactured by Kyowa Interface Science Co., Ltd.).
Further, the ceramic tiles were treated in the same manner using the treatment agent compositions Nos. 1, 4, and 5 in the above Table 1-2 which do not contain an amido amine oxide as Comparative Examples, and the contact angle of distilled water was measured under the conditions as described above.

**[Table 14]**

| | Contact angle (°) |
|---|---|
| Treatment agent composition No.1 | 88 |
| Treatment agent composition No.4 | 85 |
| Treatment agent composition No.5 | 90 |

The contact angle of distilled water on the surface of the ceramic tile treated with the composition of the present invention as described in the above Table 13 is 96°. On the other hand, the contact angles of distilled water on the surface of the ceramic tiles treated with the treatment agent compositions Nos.1, 4, and 5 which do not contain lauramidopropyl dimethylamine oxide which is one of the amido amine oxides described in Table 14 are only 90° at the highest.
These results show that the effect of water repellency obtained by the present invention is not only an effect obtained by blending octadecyldimethyl(3-trimethoxysilylpropyl)ammonium chloride or octadecyldimethyl(3-triethoxysilylpropyl)ammonium chloride, but an effect obtained by further blending an amido amine oxide.

### Example 13

### Test results for water repellency in washing load test

Three glass plates of the same type were prepared. One of the glass plates was not subjected to the following treatment. The other two glass plates were coated with a solution obtained by diluting the Example multifunctional surface-treatment agent composition No.3 with city water 5 times. After 5 minutes, the coated glass plates were washed with distilled water and dried. One of the resulting two glass plates was measured for the contact angle of water on the coated surface. The other glass plate was subjected to the following washing addition test, and after the test, the contact angle of water on the coated surface was measured.

**[Table 15]**

| | | Untreated | Treated with multifunctional surface-treatment agent composition (5 times) | Washing addition test |
|---|---|---|---|---|
| Contact angle (°) | Salad oil | 38 | 97 | 87 |

According to these results, it can be understood that the water repellency of a glass plate is improved by applying the multifunctional surface-treatment agent composition of the present invention to the glass plate and the durability of its effect is high.
Further, according to the numerical values of the contact angle after the washing load test, the contact angle on the surface of the glass plate shows a high numerical value of 87 degrees even after a severe test of reciprocating a white pad 7000 times. Thus, the treatment with the multifunctional surface-treatment agent composition of the present invention allows high water repellency to be maintained even after repeated washing.
* The washing load test is for evaluating the durability (abrasion) of the multifunctional surface-treatment agent composition in a simulated manner. The test was performed according to JIS K3920 Test methods for floor polishes, 19, Resistance to detergents, C) Washability testing machine. A white pad manufactured by Sumitomo 3M was mounted on the machine and reciprocated 7000 times at a speed of 37 reciprocations per minute with a press mass of 1000 g while a suitable amount of water was occasionally dropwise added.

### Example 14

### Results of the measurement of the coefficient of friction of ceramic tile (using testing machine for measuring electric resistance values)

Test results for the measurement of the coefficient of friction of ceramic tile (Ceramica Cleopatra "Hi-Tec Stone OZ-4600")

Treatment method with multifunctional surface-treatment agent composition: The Example multifunctional surface-treatment agent composition NO. 3 was diluted 2.5 times with city water. The ceramic tiles were washed with detergent and dried, and then coated with the dilution. After 5 minutes, the coated ceramic tiles were washed with water and dried.

**[Table 16]**

| Surface electric resistance value (Ω) | | Ceramic tile: multifunctional surface-treatment agent composition (2.5-time diluted solution, 15-minute contact) | | | |
|---|---|---|---|---|---|
| | | Coefficient of friction | | Contact angle | |
| | | Coefficient of static friction (µS) | Coefficient of dynamic friction (µK) | Distilled water | Salad oil |
| Untreated | 2x10E+10 | 0.316 | 0.293 | 61 | 25 |
| Treated article | 7x10E+9 | 0.264 | 0.246 | 96 | 46 |
| Durability load for treated article | 3.5x10E+9 | 0.216 | 0.187 | - | - |

Both the coefficient of static friction and the coefficient of dynamic friction of the ceramic tile (treated article) treated with the multifunctional surface-treatment agent composition were reduced to improve slidability of the surface of the ceramic tile. The improvement in slidability means, for example, that the slidability with cleaning utensils such as mops is improved during the cleaning of the surface of the ceramic tile. Thus, an effect of reducing a force required for cleaning work is exhibited in combination with a water repellency and oil repellency effect. The high durability can be understood by the fact that when the ceramic tile is treated with the multifunctional surface-treatment agent composition, the coefficient of friction is not increased even if a cleaning durability load is given.
* The coefficient of friction was measured with a surface property tester HEIDON-14 ASTM, wherein a flat indenter was equipped with cotton cloth and used for measurement at a moving speed of 75 mm/min and a load of 500 g.
For evaluating the durability (abrasion) of the multifunctional surface-treatment agent composition in a simulated manner, the test was performed according to JIS K3920 Test methods for floor polishes, 19, Resistance to detergents, C) Washability testing machine. A white pad manufactured by Sumitomo 3M was mounted on the machine and reciprocated 7000 times at a speed of 37 reciprocations per minute with a press mass of 1000 g while a suitable amount of water was occasionally dropwise added.

**[Table 17]**

| | Coefficient of friction | | | |
|---|---|---|---|---|
| | No durability load for treated article | | With durability load for treated article | |
| | Coefficient of static friction (µS) | Coefficient of dynamic friction (µK) | Coefficient of static friction (µS) | Coefficient of dynamic friction (µK) |
| Treatment agent composition No.1 | 0.275 | 0.269 | 0.295 | 0.305 |
| Treatment agent composition No.4 | 0.269 | 0.235 | 0.293 | 0.281 |
| Treatment agent composition No.5 | 0.275 | 0.263 | 0.305 | 0.290 |

Each example shown in Table 17 corresponding to Comparative Examples shows a comparable coefficient of static friction and coefficient of dynamic friction relative to the Examples of the present invention shown in Table 16 before applying a durability load for treated articles, but after the application of the durability load for treated articles, the coefficient of static friction and coefficient of dynamic friction are higher than before the application of the load.
This shows that when the ceramic tile surface treated with the composition of the present invention is used, a force required for friction may be smaller even if the ceramic tile is repeatedly washed. Conversely, in view of the results of Table 17, it can be understood that if a composition which is not the composition of the present invention is employed, a force applied to cleaning utensils such as mops for rubbing the surface of the ceramic tile at the time of cleaning the ceramic tile will be increased as the ceramic tile is repeatedly washed.
The present invention shows that, by adding an amido amine oxide to the composition to be used, in addition to octadecyldimethyl(3-trimethoxysilylpropyl)ammonium chloride and octadecyldimethyl(3-triethoxysilylpropyl)ammonium chloride, the increase in the coefficient of static friction and coefficient of dynamic friction of the treated surface is prevented even if the treated surface is continuously used, thus allowing easy cleaning of the treated surface.

### Example 15

### Results of the measurement of the coefficient of friction of glass plate (using testing machine for measuring electric resistance values)

Treatment method with multifunctional surface-treatment agent composition: The Example multifunctional surface-treatment agent composition No. 3 was diluted 20 times with city water. A glass plate was washed with detergent and dried, and then coated with the dilution. After 5 minutes, the coated glass plate was washed with water and dried.

**[Table 18]**

| Surface electric resistance value (Ω) | | Glass plate: multifunctional surface-treatment agent composition (2.5-time diluted solution, 15-minute contact) | | | |
|---|---|---|---|---|---|
| | | Coefficient of friction | | Contact angle | |
| | | Coefficient of static friction (µS) | Coefficient of dynamic friction (µK) | Distilled water | Salad oil |
| Untreated | 2x10E+10 | 0.316 | 0.293 | 61 | 25 |
| Treated article | 7x10E+9 | 0.264 | 0.246 | 96 | 46 |
| Durability load for treated article (1) | 3.5x10E+9 | 0.216 | 0.187 | - | - |

Both the coefficient of static friction and the coefficient of dynamic friction of the glass plate treated with the multifunctional surface-treatment agent composition were reduced as the surface electric resistance value was reduced, thus improving slidability of the surface of the glass plate. The improvement in slidability means, for example, that the slidability with cleaning utensils such as dustcloths is improved during the cleaning of the surface of the glass . Thus, an effect of reducing a force required for cleaning work is exhibited in combination with a water repellency and oil repellency effect.
* The coefficient of friction was measured with a surface property tester HEIDON-14 ASTM, wherein a flat indenter was equipped with cotton cloth and used for measurement at a moving speed of 75 mm/min and a load of 500 g.

### Example 16

### Results of the measurement of the coefficient of friction of floor tile (using testing machine for measuring electric resistance values)

Treatment method with multifunctional surface-treatment agent composition: The Example multifunctional surface-treatment agent composition NO.3 is diluted 5 times with city water. A floor tile (Genius Plain, GE-1100, manufactured by Tajima Inc.) is washed with detergent, and then coated with the dilution. After 15 minutes, the coated floor tile is washed with water and dried.

**[Table 19]**

| Surface electric resistance value (Ω) | | Genius Plain (black), blue pad-treated tile: multifunctional surface-treatment agent composition (2.5-time diluted solution, 15-minute contact) | |
|---|---|---|---|
| | | Coefficient of friction | |
| | | Coefficient of static friction (µS) | Coefficient of dynamic friction (µK) |
| Untreated | 2x10E+10 | 0.373 | 0.323 |
| Treated article | 7x10E+9 | 0.33 | 0.295 |

The floor tile treated with the multifunctional surface-treatment agent composition has a low surface electric resistance value, which allows reduction of the accumulation of static electricity, contributing to the reduction of troubles caused by static electricity.

### Example 17

### Test results for deodorization properties

### (1) [Results in a state where urine was applied to a porcelain tile]

### Treatment method:

A. A porcelain tile was washed with neutral detergent, and then washed with water and dried.
B. A 90-mm porcelain tile was washed with detergent and dried, and then coated with 1 g of Beautiful Mist (registered trademark) manufactured by Lion Corporation with gauze. The porcelain tile was washed with water at 30°C for 30 minutes in an ultrasonic washer (BRANSONIC B1200) containing city water, and then dried.
C. The Example multifunctional surface-treatment agent composition No.3 was diluted 5 times with city water. A porcelain tile was washed and then coated with 1 g of the dilution. After 10 minutes, the coated porcelain tile was washed with water and dried.
D. The Example multifunctional surface-treatment agent composition No.3 was diluted 5 times with city water. A porcelain tile was washed and then coated with 1 g of the dilution. After 10 minutes, the coated porcelain tile was washed with water and dried. The resulting porcelain tile was washed with water at 30°C for 30 minutes in an ultrasonic washer (BRANSONIC B1200) containing city water, and then dried.

**[Table 20]**

| | Constant temperature machine (35°C) | | | Allowed to stand at room temperature | Unit |
|---|---|---|---|---|---|
| | 5 hours | 10 hours | 24 hours | For 10 days | |
| Control (untreated) (A) | 0 | 25 | 50 | 500 | ppm |
| Lion Beautiful Mist (ultrasonic washing) (B) | 25 | 50 | 100 | 500 | |
| Multifunctional surface-treatment agent composition (5-time dilution) (C) | 0 | 25 | 50 | 200 | |
| After multifunctional surface-treatment agent composition (5-time dilution)+ultrasonic washing (D) | 0 | 25 | 50 | 250 | |

| | | | | | |
|---|---|---|---|---|---|
| (Notes: Numerical values refer to the concentration of ammonia) | | | | | |

When the porcelain tile was treated with Beautiful Mist manufactured by Lion Corporation, the concentration of ammonia was about the same as that of the control, but when the porcelain tile was treated with the multifunctional surface-treatment agent composition of the present invention, the concentration of ammonia was lower than that of the porcelain tile treated with the Beautiful Mist, while the concentration was not largely changed by the ultrasonic washing.
Further, the concentration of ammonia until 24 hours for the porcelain tile treated with the multifunctional surface-treatment agent composition of the present invention was about the same level as that for the control, but after allowing to stand for 10 days at room temperature, the concentration of ammonia for the treated porcelain tile was lower than that for the control. * To the entire surface of these porcelain tiles, is applied 2 ml of urine with gauze and it is allowed to stand in a room for 6 hours. Then, the porcelain tile to which urine is applied and a gas detecting tube, ammonia No. 3, manufactured by Gastec Corporation (Passive Dosi-Tube) are put in a stopperable polyethylene container having a total volume of 1800 ml, and the ammonia concentration of the detecting tube is read.

### Example 18

### [Results in a state where urine was put in a glass bottle]

Treatment method with multifunctional surface-treatment agent composition: Two wide-mouthed mayonnaise bottles each having a total volume of 450 ml are prepared. The Example multifunctional surface-treatment agent composition NO.3 is diluted 5 times with city water, and 5 ml of the dilution is put into one of the bottles and brought in contact with the bottle so as to spread over the inner surface of the bottle, which is allowed to stand for 10 minutes, rinsed with running water, and dried. The other bottle is rinsed with running water and dried. Each of the bottles is charged with 3 ml of urine, allowed to stand in a room for 6 hours, and then stoppered, into which a gas detecting tube, ammonia No. 3, manufactured by Gastec Corporation (Passive Dosi-Tube) is put, and the ammonia concentration of the detecting tube is read.

**[Table 21]**

| | Constant temperature machine (35°C) | | | Allowed to stand at room temperature | |
|---|---|---|---|---|---|
| | 5 hours | 10 hours | 24 hours | For 10 days | For 14 days |
| Control (untreated) | 0 | 25 | 50 | 200 | 500 |
| Multifunctional surface-treatment agent composition (5-time dilution) | 0 | 25 | 50 | 150 | 300 |

When a glass bottle is treated with the multifunctional surface-treatment agent composition of the present invention, an effect relative to the control in a short period of time caused by the high temperature phase is not particularly observed in the resulting glass bottle; however, in the case of long period of time in which the glass bottle is allowed to stand for 10 days and 14 days at room temperature, such an effect can be exhibited that the concentration of ammonia is suppressed and occurrence of a bad smell is suppressed as compared with the control.

### Example 19

### Test results of the measurement of the coefficient of friction of wax mop

Test method: A test piece (90 × 70 mm is installed in HEIDON (surface property tester) and measured at a load of 0.5 kg and 150 mm/min. Two types of mops, Flat Mop (manufactured by Hanwa Ltd.) and Wax Mop manufactured by Teramoto Corp. were employed as the test piece.
Treatment method with multifunctional surface-treatment agent: The Example surface multifunctional-treatment agent No. 3 was diluted 5 times with city water, and the mops were impregnated with the dilution for 10 minutes, washed, and dried for use.
"Dry" refers to a mop at the time of drying.
The floor polish with which the mops are impregnated is Luster VX manufactured by Suisho Petrochemical Industry Co., Ltd., and the measurement was performed by impregnating the mops with Luster VX in an amount corresponding to 15 ml/m².

**[Table 22-1]**

| Results of the control (untreated) | | | | |
|---|---|---|---|---|
| | Flat mop (Hanwa) | | Teramoto | |
| | Coefficient of static friction (µS) | Coefficient of dynamic friction (µK) | Coefficient of static friction (µS) | Coefficient of dynamic friction (µK) |
| Dry | 0.402 | 0.300 | 0.383 | 0.277 |
| Luster VX (15ml) | 0.569 | 0.430 | 0.509 | 0.397 |

**[Table 22-2]**

| Results of the multifunctional surface-treatment agent composition treatment (5-time dilution) | | | | |
|---|---|---|---|---|
| | Flat mop (Hanwa) | | Teramoto | |
| | Coefficient of static friction (µS) | Coefficient of dynamic friction (µK) | Coefficient of static friction (µS) | Coefficient of dynamic friction (µK) |
| Dry | 0.290 | 0.236 | 0.287 | 0.242 |
| Luster VX (15ml) | 0.466 | 0.373 | 0.439 | 0.348 |

As shown in Tables 22-1 and 22-2, both of the two types of mops which were treated with Luster have higher coefficients of static friction and higher coefficients of dynamic friction than the untreated mops. Thus, it can be understood that when mops are impregnated with wax, considerable force is required for pushing these mops during use due to the increase in the coefficient of friction.
However, it is understood that two types of mops subjected to the treatment with the multifunctional surface-treatment agent according to the present invention, including both the "Dry" mops and the mops treated with Luster, have lower coefficients of static friction and lower coefficients of dynamic friction than the untreated mops. As a result, the mops treated with the multifunctional surface-treatment agent of the present invention, including both the "Dry" mops and the mops treated with Luster, can be used with a smaller force. Note that besides the test of the measurement of the coefficient of friction as described above, six persons actually felt the application test with these mops, using the actual floor surface. Similar to the above test results, it was possible to feel a lighter touch from the mops subjected to the treatment with the multifunctional surface-treatment agent, and it was verified that when the coating amount of the floor polish was constant, a larger area can be coated.

### Example 20

### Results of stain resistance test of the floor polish coating surface

A floor tile (Genius Plain, GE-1100, manufactured by Tajima Inc.) having a size of 300 mm x 150 mm is washed with detergent, washed with water, and dried, to which is applied Luster VX manufactured by Suisho Petrochemical Industry Co., Ltd. in an amount corresponding to 15 ml/m² three times with gauze. The Example multifunctional surface-treatment agent composition No.3 is diluted 50 times with city water, and the dilution in an amount corresponding to 15 ml/m² is applied with gauze to the surface treated with Luster. After 10 minutes, the resulting surface is washed with water and dried. After that, the treated floor tile is compared with an untreated flooring material according to 16: Heel mark resistance test of JIS K3920 2009 Test methods for floor polishes.

**[Table 23]**

| | Heel mark resistance (the number of heel marks) |
|---|---|
| Untreated | 8 |
| Treated | 3 |

As shown in Table 23, it can be understood that adhesion of heel marks (black stains of the heels of shoes) has been decreased on the surface of the floor polish which is subjected to the multifunctional surface-treatment agent treatment. This is very useful for cleaning because in the floor maintenance, the labor for removing stains can be reduced and the repainting period of a floor polish can be extended.

## Claims

1. A method for treating a material to be treated, wherein the material to be treated is not an article which has been subjected to surface treatment for adding a functional oxygen group to the surface thereof, the method comprising treating the material to be treated with a surface modification treatment agent composition containing 0.01 to 10% by weight of octadecyldimethyl(3-trimethoxysilylpropyl)ammonium chloride and/or octadecyldimethyl(3-triethoxysilylpropyl)ammonium chloride, 0.01 to 10% by weight of lauramidopropyl dimethylamine oxide, 0.01 to 5% by weight of a polyhexamethylene biguanide compound, an alcohol, and water, wherein the composition is not an algae growth-suppressing agent which suppresses the growth of algae.

2. The method for treating a material to be treated with a surface modification treatment agent composition according to claim 1, wherein the material to be treated comprises a hard material and/or a soft material, and the material to be treated is coated and/or the material to be treated is impregnated with the surface modification treatment agent composition.

3. The method for treating a material to be treated with a surface modification treatment agent composition according to claim 2, wherein the hard material and/or the soft material comprises any one or more of china, glass, metals, concretes, stone, wood, bamboo, synthetic resin, natural resin, synthetic fiber, natural fiber, leather, and paper.

4. The method for treating a material to be treated with a surface modification treatment agent composition according to claims 1 to 3, wherein the material to be treated is a cleaning utensil.

5. The method for treating a material to be treated with a surface modification treatment agent composition according to claim 4, wherein the material to be treated is a cleaning utensil for rubbing such as a mop, a dustcloth, a wiping material, a brush, a shoe-wiping mat, and/or a foot-wiping mat.

6. The method for treating a material to be treated with a surface modification treatment agent composition according to any of claims 1 to 4, wherein the material to be treated is a trash box.

7. A material to be treated which is treated by the method according to any of claims 1 to 6.
